(19) Europäisches Patentamt
European Patent Office
Office européen des brevets

(11) **EP 4 765 019 A1**

(12) **EUROPEAN PATENT APPLICATION**

(43) Date of publication:
**24.06.2026 Bulletin 2026/26**

(21) Application number: **24222072.1**

(22) Date of filing: **20.12.2024**

(51) International Patent Classification (IPC):
**G06T 7/11** *(2017.01)* **G06V 10/764** *(2022.01)*
**G06V 20/64** *(2022.01)*

(52) Cooperative Patent Classification (CPC):
**G06T 7/11; G06V 10/764; G06V 20/64;**
G06T 2207/10028; G06T 2207/30036

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **3Shape A/S**
**1060 Copenhagen K (DK)**

(72) Inventor: **ALEMÃO, João**
**1060 Copenhagen K (DK)**

(74) Representative: **Zacco Denmark A/S**
**Arne Jacobsens Allé 15**
**2300 Copenhagen S (DK)**

(54) **METHODS FOR TOOTH SURFACE IDENTIFICATION**

(57) A method and a system for segmenting a 3D digital representation of a tooth into segments is provided. The method includes obtaining the 3D digital representation of the tooth. The 3D digital representation includes a plurality of facets. The method may further comprise determining a facet normal for each facet of the plurality of facets of the 3D digital representation, assigning each facet of the plurality of facets to a particular segment of a plurality of segments based on a direction of a corresponding facet normal, and grouping one or more facets of the plurality of facets of the 3D digital representation based on the assigning.

100

**FIG. 1**

**Description**

**TECHNOLOGICAL FIELD**

The present disclosure relates generally to surface determination of a three-dimensional (3D) dental object representation, such as a 3D representation of a tooth of a subject. Specifically, the present disclosure relates to segmenting a 3D representation of a tooth into segments.

**BACKGROUND OF THE INVENTION**

Digital dentistry is a growing trend with an increasing number of dentists relying on digital systems for analysing a subject's dentition and providing orthodontic treatments. In an example, an intraoral scanner may be used to generate a digital three-dimensional (3D) model of the subject's dentition. Further, analysis of such dentition may be useful for, for example, dental charting, diagnostic reporting of a surface of the dentition, diagnosis of caries, identification of requirement of orthodontic or cosmetic treatments, making prosthodontic restorations, advanced diagnostics such as detecting wear, and analysis of the surface of the dentition.

To this end, the generation of an accurate 3D dental model of the subject's dentition is crucial for making precise restorations and for accurate diagnostics. Generation of the 3D dental model may include generating a 3D representation for each tooth of the dentition of the subject. The 3D representation of a tooth may be created using multiple facets. Thereafter, multiple facets of each tooth of the dentition are combined or stitched together to generate the 3D dental model of the subject's dentition.

In certain cases, estimations are made to identify different surfaces in the 3D representation or the 3D dental model. For example, the identification of a surface of a tooth to which a segment of a 3D representation of the tooth corresponds may be used for dental charting, diagnostics, analysis of dental surface, and for making restoration. However, as the shape, size and structure of different teeth in the subject's dentition may vary, conventional techniques for estimating which segment of a 3D representation of a tooth belongs to which surface of the tooth are not accurate.

Accordingly, a need exists for accurately segmenting a 3D digital representation of a tooth for estimating or identifying a surface associated with each of a plurality of segments of a 3D representation of a subject's tooth.

**SUMMARY**

A computer-implemented method and a computer system are provided for segmenting a 3D digital representation of a tooth into segments for identifying a surface of the tooth associated with each of the segments of the 3D digital representation.

It is an objective of the present disclosure to provide techniques for accurate segmentation of the 3D digital representation of the tooth into segments.

In one aspect, a computer-implemented method for segmenting a 3D digital representation of a tooth into segments is provided. The computer-implemented method includes obtaining the 3D digital representation of the tooth. The 3D digital representation comprises a plurality of facets. The computer-implemented method may further comprise determining a facet normal for each facet of the plurality of facets of the 3D digital representation. The computer-implemented method may further comprise assigning each facet of the plurality of facets to a particular segment of a plurality of segments based on a direction of a corresponding facet normal. The computer-implemented method may further comprise grouping one or more facets of the plurality of facets of the 3D digital representation based on the assigning.

In an embodiment, the computer-implemented method may further comprise performing a smoothing operation on the facet normal for each facet of the plurality of facets. The computer-implemented method may further comprise assigning each facet of the plurality of facets to the particular segment of the plurality of segments based on the corresponding smoothed facet normal.

In an embodiment, the computer-implemented method further comprises performing the smoothing operation on a first facet normal of a first facet of the plurality of facets. In this regard, the computer-implemented method may further comprise retrieving one or more facet normals of one or more neighbouring facets of the first facet. The computer-implemented method may further comprise determining a weighted summation of the retrieved one or more facet normals and the first facet normal. The computer-implemented method may further comprise determining a smoothed facet normal direction for the first facet normal based on the weighted summation. The computer-implemented method may further comprise assigning the smoothed facet normal direction to the first facet. The computer-implemented method may further comprise assigning the first facet to a first segment of the plurality of segments based on the smoothed facet normal direction.

In an embodiment, the computer-implemented method further comprises determining a plurality of weighted summations of the one or more facet normal and the first facet normal in a plurality of iterations until a criterion is met. The computer-implemented method may further comprise determining a normalized smoothed facet normal direction for the first facet normal based on the plurality of weighted summations. The computer-implemented method may further comprise assigning the normalized smoothed facet normal direction to the first facet.

In an embodiment, the criterion is a predetermined number of iterations. In another embodiment, the criterion is associated with an angle threshold for an angle difference between a facet normal direction of the first facet normal of the first facet and the normalized smoothed facet normal direction of the first facet normal.

In an embodiment, the angle threshold is less than 20 or less than 15 or less than 10 or less than 5 degrees.

In an embodiment, the computer-implemented method further comprises obtaining a 3D dental model of a dentition of a patient. The computer-implemented method may further comprise segmenting the 3D dental model to obtain the 3D digital representation of the tooth. The computer-implemented method may further comprise applying a trained neural network to the 3D digital representation of the tooth and the grouped one or more facets of the plurality of facets. The computer-implemented method may further comprise determining pose information for the 3D digital representation of the tooth based on the application of the trained neural network.

In an embodiment, each of the plurality of segments is associated with one of: an occlusal surface, a buccal surface, or a lingual surface.

In an embodiment, the computer-implemented method further comprises defining a tooth coordinate system for the tooth. The tooth coordinate system comprises a first co-ordinate axis points in a direction of the occlusal surface of the tooth and a second co-ordinate axis points in a direction of the buccal surface of the tooth. The computer-implemented method may further comprise determining a facet vector for each facet of the plurality of facets. The computer-implemented method may further comprise projecting the facet vector for each facet of the plurality of facets of the 3D digital representation to the tooth coordinate system. The computer-implemented method may further comprise defining each of the plurality of segments of the tooth based on the tooth coordinate system. Each of the plurality of segments is associated with one of: the occlusal surface, the buccal surface, or the lingual surface. The computer-implemented method may further comprise assigning each facet of the plurality of facets to one of: the occlusal surface, the buccal surface, or the lingual surface. The assignment is based on based on the projection of the facet vector for each facet of the plurality of facets in the tooth coordinate system.

In an embodiment, the computer-implemented method may further comprise identifying an island facet from the one or more facets associated with the particular segment of the plurality of segments. The computer-implemented method may further comprise identifying a neighbouring facet for the island facet. The computer-implemented method may further comprise determining a neighbouring segment associated with the neighbouring facet. The computer-implemented method may further comprise controlling a merging of the island facet associated with the particular segment and the neighbouring facet based on the particular segment and the neighbouring segment.

In an embodiment, the computer-implemented method may further comprise merging the island facet associated with the particular segment and the neighbouring facets of the neighbouring segment based on a first determination that the neighbouring segment is different from the particular segment, and a second determination that a size of the island facet is less than a size threshold.

In another aspect, a computer system for segmenting a 3D digital representation of a tooth into segments is provided. The computer system comprises a memory configured to store computer executable instructions, and one or more processors configured to execute the instructions to obtain the 3D digital representation of the tooth. The 3D digital representation comprises a plurality of facets. The one or more processors are further configured to determine a facet normal for each facet of the plurality of facets of the 3D digital representation. The one or more processors are further configured to assign each facet of the plurality of facets to a particular segment of a plurality of segments based on a direction of a corresponding facet normal. The one or more processors are further configured to group one or more facets of the plurality of facets of the 3D digital representation based on the assigning.

In an embodiment, the one or more processors are further configured to perform a smoothing operation on the facet normal for each facet of the plurality of facets. The one or more processors are further configured to assign each facet of the plurality of facets to the particular segment of the plurality of segments based on the corresponding smoothed facet normal.

In an embodiment, to perform the smoothing operation on a first facet normal of a first facet of the plurality of facets, the one or more processors are further configured to retrieve one or more facet normals of one or more neighbouring facets of the first facet. The one or more processors are further configured to determine a weighted summation of the retrieved one or more facet normals and the first facet normal. The one or more processors are further configured to determine a smoothed facet normal direction for the first facet normal based on the weighted summation. The one or more processors are further configured to assign the smoothed facet normal direction to the first facet. The one or more processors are further configured to assign the first facet to a first segment of the plurality of segments based on the smoothed facet normal direction.

The foregoing summary is illustrative only and is not intended to be in any way limiting. In addition to the illustrative aspects, embodiments, and features described above, further aspects, embodiments, and features will become apparent by reference to the drawings and the following detailed description.

According to the present disclosure, a computer system and a computer-implemented method are provided. One of the purposes of the present disclosure is to accurately segment a 3D digital representation of a tooth into segments. The accurate segmentation enables identification of different surfaces of the tooth in the 3D digital representation thereof.

The accurate identification of tooth surfaces in the 3D digital representation of the tooth is crucial for a wide range of operations. These operations include, but are not limited to, dental charting, effective navigation across dental software, identification of certain points of interest, classification of the tooth surfaces in the 3D digital representation, surface diagnostic reporting and analysis, diagnosis of gingiva, diagnosis of proximal caries, identification of a need for a restorative or cosmetic treatment, and ensuring the accuracy of mapping surface-related data and surfaces for various applications.

In the present disclosure, the computer system and the computer-implemented method employ the direction of facet normals of the 3D digital representation for estimating segments of the 3D digital representation corresponding to different surfaces of the tooth. The computer system and the computer-implemented method overcome the limitations associated with conventional methods for segments or surface identification of 3D digital representations.

## BRIEF DESCRIPTION OF THE DRAWINGS

The present disclosure is illustrated by way of example and not by way of limitation in the figures of the accompanying drawings, in which the like reference numerals indicate like elements and in which:

FIG. 1 illustrates an exemplary network environment in which a computer system for segmenting a 3D digital representation of a tooth into segments is implemented, in accordance with an example embodiment of the present disclosure;

FIG. 2 illustrates an exemplary schematic diagram of a 3D dental model of teeth and a 3D digital representation of a tooth of the teeth, in accordance with an example embodiment of the present disclosure;

FIG. 3A illustrates a schematic diagram of a facet, in accordance with an example embodiment of the present disclosure;

FIG. 3B illustrates a schematic diagram of the 3D dental model of teeth comprising a plurality of facets, in accordance with an example embodiment of the present disclosure;

FIG. 4A illustrates a block diagram of exemplary operations for performing a smoothing operation on a facet normal of a facet of the plurality of facets, in accordance with an example embodiment of the present disclosure;

FIG. 4B illustrates a schematic diagram of a direction of a facet normal before an application of the smoothing operation, in accordance with an example embodiment of the present disclosure;

FIG. 4C illustrates a schematic diagram of a direction of a facet normal after an application of the smoothing operation, in accordance with an example embodiment of the present disclosure;

FIG. 5A illustrates a block diagram of exemplary operations for grouping one or more facets of a segment, in accordance with an example embodiment of the present disclosure;

FIG. 5B illustrates a schematic diagram of an exemplary tooth coordinate system of a 3D digital representation of a tooth, in accordance with an example embodiment of the present disclosure;

FIG. 5C illustrates a block diagram of exemplary operations for rendering a segmented image of a tooth, in accordance with an example embodiment of the present disclosure;

FIG. 5D illustrates a schematic diagram of an exemplary tooth coordinate system of the 3D dental model, in accordance with an example embodiment of the present disclosure;

FIG. 6A illustrates a block diagram of exemplary operations for merging islands of facets, in accordance with an example embodiment of the present disclosure;

FIG. 6B illustrates a schematic diagram of surfaces of teeth before an application of an islands merging operation, in accordance with an example embodiment of the present disclosure;

FIG. 6C illustrates a schematic diagram of surfaces of teeth after an application of an islands merging operation, in accordance with an example embodiment of the present disclosure;

FIG. 7 illustrates a block diagram of exemplary operations for rendering a dentition image of the 3D dental model, in accordance with an example embodiment of the present disclosure; and

FIG. 8 illustrates a flowchart of a method for segmenting a 3D digital representation of a tooth into segments, in accordance with an example embodiment of the present disclosure.

## DETAILED DESCRIPTION

In the following description, for purposes of explanation, numerous specific details are set forth in order to provide a thorough understanding of the present disclosure. It will be apparent, however, to one skilled in the art that the present disclosure may be practised without these specific details. In other instances, systems and methods are shown in block diagram form only in order to avoid obscuring the present disclosure.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Some embodiments of the present disclosure will now be described more fully hereinafter with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present disclosure. Further, the terms "processor", "controller" and "processing circuitry" and similar terms may be used interchangeably to refer to the processor capable of processing information in accordance with embodiments of the present disclosure. Further, the terms "electronic equipment", "electronic devices" and "devices" are used interchangeably to refer to electronic equipment monitored by the system in accordance with embodiments of the present disclosure. Thus, the use of any such terms should not be taken to limit the spirit and scope of embodiments of the present disclosure.

The embodiments are described herein for illustrative purposes and are subject to many variations. It is understood that various omissions and substitutions of equivalents are contemplated as circumstances may suggest or render expedient but are intended to cover the application or implementation without departing from the spirit or the scope of the present disclosure. Further, it is to be understood that the phraseology and terminology employed herein are for the purpose of the description and should not be regarded as limiting. Any heading utilized within this description is for convenience only and has no legal or limiting effect.

As used in this specification and claims, the terms "for example" "for instance" and "such as", and the verbs "comprising," "having," "including" and their other verb forms, when used in conjunction with a listing of one or more components or other items, are each to be construed as open ended, meaning that that the listing is not to be considered as excluding other, additional components or items. Other terms are to be construed using their broadest reasonable meaning unless they are used in a context that requires a different interpretation.

A computer system and a computer-implemented method are provided for segmenting a three-dimensional (3D) digital representation of a tooth into segments to provide an accurate depiction of various surfaces of the tooth on the 3D digital representation of the tooth, thereby ensuring accuracy in diagnosis and analysis of tooth surfaces.

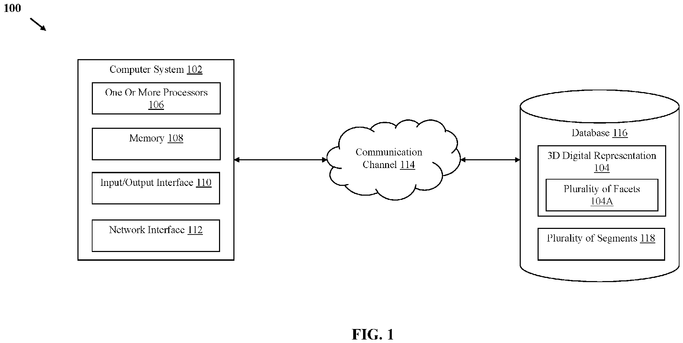

For instance, an exemplary network environment of the computer system for segmenting a 3D digital representation of a tooth into segments is provided below with reference to FIG. 1.

FIG. 1 illustrates an exemplary network environment 100 in which a computer system 102 for segmenting a 3D digital representation 106 of a tooth into segments is implemented, in accordance with an example embodiment of the present disclosure. The computer system 102 may be used to segment the 3D digital representation 106 of the tooth into the segments and represent different segments or surfaces of the 3D digital representation 106 of the tooth in a graphical user interface. Furthermore, the computer system 102 may be used for estimation of a plurality of segments of the tooth. For example, the computer system 102 may be used by a user, such as a person having knowledge of dentistry, for example, a dentist, a dental technician, and so forth. Further, it is possible that one or more components of the network environment 100 and/or the computer system 102 may be rearranged, changed, added, and/or removed without deviating from the scope of the present disclosure.

The system 102 may include multiple components, such as one or more processors 106, a memory 108, an input/output interface 110, and a network interface 112. that may communicate with each other to obtain the 3D digital representation 104 of the tooth. The network environment 100 may further include a database 116 and a communication channel 114 that may be configured to establish communicative coupling between components of the computer system 102 and the database 116.

The one or more processors 106 (referred to as the processors 106, hereinafter) may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor 106 may include one or more processing cores configured to perform independently. A multi-core processor may enable multiprocessing within a single physical package. Additionally, or alternatively, the processor 106 may include one or more processors configured in tandem via a bus to enable independent execution of instructions, pipelining and/or multithreading. Additionally, or alternatively, the processor 106 may include one or more processors capable of processing large volumes of workloads and operations to provide support for big data analysis. In an example embodiment, the processor 106 may be in communication with the other components of the computer system 102 (referred to as system 102, hereinafter) via a bus or the communication channel 114 for passing information among components of the system 102.

In an example, when the processors 106 are embodied as an executor of software instructions, the instructions may specifically configure the processors 106 to perform the algorithms and/or operations described herein when the instructions are executed. However, in some cases, the processor 106 may be a processor specific device (for example, a mobile terminal or a fixed computing device) configured to employ an embodiment of the present disclosure by further configuration of the processor 106 by instructions for performing the algorithms and/or operations described herein. The processor 106 may include, among other things, a clock, an arithmetic logic unit (ALU) and logic gates configured to support operation of the processor 106. The network environment, such as, 100 may be accessed using the communication channel 114.

The communication channel 114 may be wired, wireless, or any combination of wired and wireless communication networks, such as cellular, wireless fidelity (Wi-Fi), internet, local area networks, or the like. In accordance with an embodiment, the communication channel 114 may be one or more wireless full-duplex communication channels. In one embodiment, the communication channel 114 may include one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fibre-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks (for e.g. LTE-Advanced Pro), 5G New Radio networks, ITU-IMT 2020 networks, code division multiple access (CDMA), wideband code division multiple access (WCDMA), wireless fidelity (Wi-Fi), wireless LAN (WLAN), Bluetooth, Internet Protocol (IP) data casting, satellite, mobile ad-hoc network (MANET), and the like, or any combination thereof. The database 116 may be configured to communicate with the processors 106 via the communication channel 114.

The system 102 may be configured to store, such as in the memory 108, data generated by the system 102. For example, the system 102 may be configured to store the 3D digital representation 104 of the tooth of a patient. The 3D digital representation 104 may include information associated with an intraoral site of the patient. Moreover, the system 102 may be configured to store data generated by the processors 106. Such data may include a plurality of segments 118, i.e., a particular segment of the plurality of segments 118 of the tooth of the patient. The system 102 may be utilized for the registration of intraoral scans and generating a 3D dental model of a dentition of the patient to show surface information of each tooth or each 3D digital representation of a tooth.

The memory 108 may be non-transitory and may include, for example, one or more volatile and/or non-volatile memories. In other words, for example, the memory 108 may be an electronic storage device (for example, a computer-readable storage medium) including gates configured to store data (for example, bits) that may be retrievable by a machine (for example, a computing device like the processor 106). The memory 108 may be configured to store information, data, content, applications, instructions, or the like, to enable the apparatus to carry out various functions in accordance with an example embodiment of the present disclosure. For example, the memory 108 may be configured to store the 3D digital representation 104 of the tooth. In certain cases, the memory 108 may be configured to store a 3D dental model of a dentition or teeth of the patient. The memory 108 may be configured to store instructions for execution by the processor 106. As such, whether configured by hardware or software methods, or by a combination thereof, the processor 106 may represent an entity (for example, physically embodied in circuitry) capable of performing operations according to an embodiment of the present disclosure while configured accordingly. Thus, for example, when the processor 106 is embodied as the microprocessor, the processor 106 may be specifically configured hardware for conducting the operations described herein. Alternatively, as another example, when the processor 106 is embodied as an executor of software instructions, the instructions may specifically configure the processor 106 to perform the algorithms and/or operations described herein when the instructions are executed. The processor 106 may include, among other things, a clock, an arithmetic logic unit (ALU) and logic gates configured to support operation of the processor 106. It should be noted that the processor 106 described in relation to the computer system 102 may preferably process the 3D digital representation 104 of the tooth to ensure determination of a segment for different surfaces or parts of the tooth based on facet normals that are assigned to a plurality of facets of the 3D digital representation 104 of the tooth. The method for segmenting the 3D digital representation 106 of the tooth into the segments described herein may mainly be run on the processor 106 of the system 102 and/or a cloud server operatively connected to the system 102.

The I/O interface 110 may include circuitry and/or software that may be configured to provide output to the user and receive, measure or sense input information. The I/O interface 110 may include a speaker, a vibrator, a projector unit and one or more sensors. In an embodiment, the speaker may be configured to output the acoustic feedback signal to guide the user, for example, to indicate different segments of the tooth. The vibrator 214B may be, for example, a transducer configured to convert the scanning feedback signal that may be an electrical signal into a mechanical output, such as the haptic feedback in form of vibrations to guide the user.

As may be understood, the system 102 may include a scanner device (not shown) to scan the intraoral site of the patient. In an example, the 3D digital representation 104 may be sensed, measured, or determined by the scanner device. In an example, the scanner device may include processors. In another example, the scanner device may be coupled to the processor 106, wherein the processor 106 may be located remotely and may perform operations associated with the system 102. The system 102 may have enhanced processing capabilities that may be required to process scan data in real-time to generate the 3D digital representation 104 of the tooth of the patient. The system 102 may have enhanced processing capabilities that may be required to process a plurality of two-dimensional (2D) images in real time to generate the 3D digital representation 104 of the tooth of the patient. In an example, the 3D digital representation 104 corresponds to a 3D surface model of the tooth.

The network interface 112 may include an input interface and an output interface for supporting communications to and from the system 102. The network interface 112 may be a device or circuitry embodied in either hardware or a combination of hardware and software that is configured to receive and/or transmit data to/from the system 102. In this regard, the network interface 112 may include, for example, an antenna (or multiple antennae) and supporting hardware and/or software for enabling communications with a wireless communication network. Additionally, or alternatively, the network interface 112 may include the circuitry for interacting with the antenna(s) to cause transmission of signals via the antenna(s) or to handle receipt of signals received via the antenna(s). In some environments, the network interface 112 may alternatively or additionally support wired communication. As such, for example, the network interface 112 may include a communication modem and/or other hardware and/or software for supporting communication via cable, digital subscriber line (DSL), universal serial bus (USB) or other mechanisms.

The database 116 may be non-transitory and may include, for example, one or more volatile and/or non-volatile memories. In other words, for example, the database 116 may be an electronic storage device (for example, a computer-readable storage medium) including gates configured to store data (for example, bits) that may be retrievable by a machine (for example, a computing device like the processor 106). The database 116 may be configured to store information, data, content, applications, instructions, or the like, for enabling the apparatus to carry out various functions in accordance with an example embodiment of the present disclosure. For example, the database 116 may be configured to store the 3D digital representation 104 of the tooth. In certain cases, the database 116 may be configured to store a plurality of segments 118. For example, the database may store information on each of a plurality of facets 104A of the 3D digital representation 104 of each tooth of the dentition of the patient.

In operation, the processor 106 is configured to obtain the 3D digital representation 104 of the tooth of the patient. The scanner device may be configured to capture the plurality of 2D images during a scanning session of the dentition of the patient. The plurality of 2D images may indicate images of a dentition (the teeth) of the patient captured using light that is emitted at a wavelength corresponding to a range of visible light, such as blue light (400 - 495 nm), green light (490 - 570 nm), and fluorescence light (300 - 800nm), IR or near-infrared (NIR) wavelengths. The plurality of 2D images may include images of the tooth of the patient from various viewing angles or viewing points. Based on the plurality of 2D images, a 3D dental model of the teeth of the patient may be generated. Further, the 3D dental model of the teeth of the patient may be segmented to extract a 3D digital representation of the tooth of the patient.

In an example, the processor 106 is configured to receive and/or obtain signal information from one or more sensors (referred to as sensors, hereinafter) of the scanner device. The sensors of the scanner device may include, for example, light sensors and/or image sensors. To this end, the based-on light sensed by the sensors, the sensors may capture and provide the signal information corresponding to the dentition of the patient to the processor 106. In this manner, the processor 106 is configured to obtain the plurality of 2D images of the dentition of the patient based on the signal information.

In an example, the scanner device may include a web server that may be configured to communicate via a web network and establish a connection to the communication channel 114. The scanner device may be configured to execute the web server to provide the plurality of 2D images obtained from the sensors to the processors 106. Further, the processor 106 may be configured to utilize the plurality of 2D images to generate the 3D digital representation 104 of the tooth of the patient.

Further, the 3D digital representation 104 may include the plurality of facets 104A. The plurality of facets 104A of the 3D digital representation 104 is represented by a point in a 3D point cloud of the 3D digital representation 104. Further, the 3D point cloud may include 3D points or 3D control points within voxels in a signed distance field, and the signed distance field may be converted into a 3D mesh for rendering the 3D digital representation 104. The 3D digital representation 104 may also include colour data and texture data of the surface of the tooth under consideration.

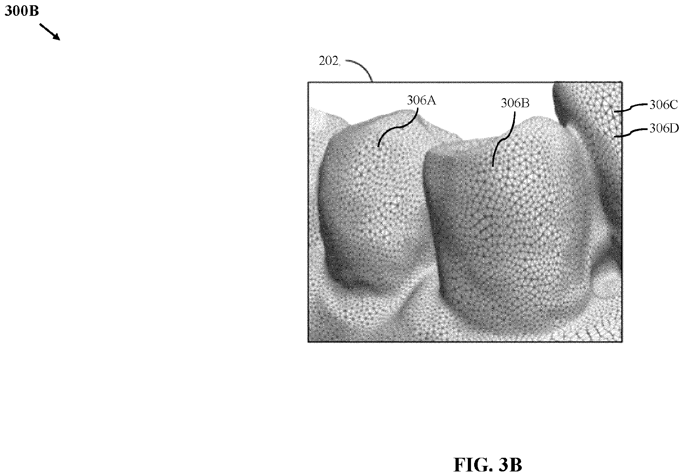

In an example, each facet of the plurality of facets 104A refers to a flat, polygon surface element that makes up a mesh of the 3D digital representation 104. Each facet of the plurality of facets 104A may correspond to a quadrilateral forming a component of the mesh that approximates the surface of a scanned object, i.e., the tooth. When the tooth is scanned using the scanner device, the scan data or the plurality of 2D images is processed to create an interconnected mesh of the plurality of facets 104A. Such a mesh represents a surface geometry of the tooth to create interconnected facets, depicted for example, in FIG. 3B. In an example, the quality and resolution of the scan data or the plurality of 2D images may affect a number and a size of the plurality of facets 104A in the mesh of the 3D digital representation 104. Generally, a large number of facets may indicate a more detailed and accurate representation of the surface of the tooth in the 3D digital representation 104.

Further, the processor 106 is configured to determine a facet normal for each facet of the plurality of facets 104A of the 3D digital representation 104. The facet normal may be denoted as a surface normal. For example, along with coordinates of sampled points of the 3D point cloud, a facet normal at each of the sample points as determined is stored.

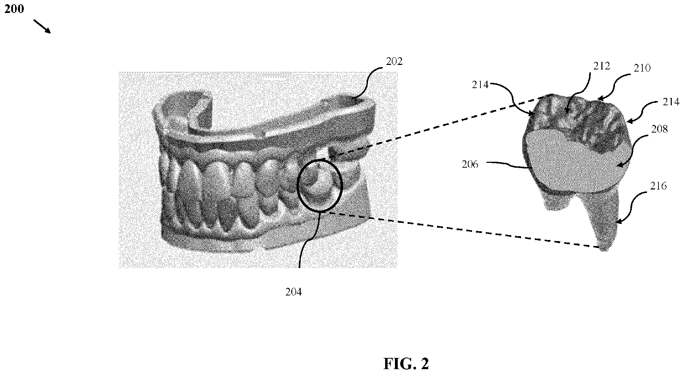

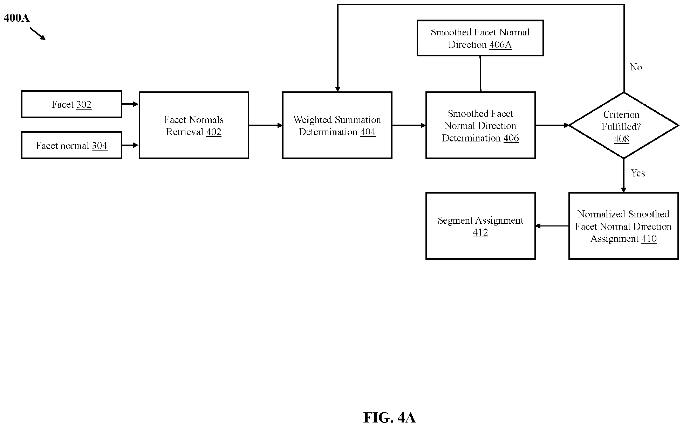

Thereafter, the processor 106 is configured to assign each facet of the plurality of facets 104A to a particular segment of the plurality of segments 118, based on a direction of a corresponding facet normal. In an example, different areas of the 3D digital representation 104 of the tooth represent the plurality of segments 118. For example, each of the plurality of segments 118 may correspond to different surfaces, such as a buccal surface, a lingual surface, and an occlusal surface of the tooth. Subsequently, to identify different segments or surfaces of the 3D digital representation 104 of the tooth, a direction of a facet normal of each of the plurality of facets 104A is considered. Details associated with the plurality of segments 118 are provided for example, in FIG. 2. Details associated with assigning each facet of the plurality of facets 104A are provided for example, in FIG. 4A.

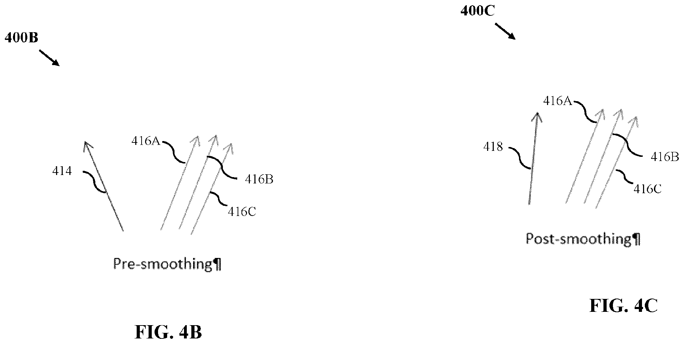

Further, the processor 106 is configured to group one or more facets of the plurality of facets 104A of the 3D digital representation 104 based on the assignment. Details associated with grouping of the one or more facets of the plurality of facets 104A are provided for example, in FIG. 4B and FIG. 4C.

FIG. 2 illustrates an exemplary schematic diagram 200 of a 3D dental model 202 of a dentition or teeth of a patient and a 3D digital representation 206 of a tooth 204 of the patient, in accordance with an example embodiment of the present disclosure. FIG. 2 is explained in conjunction with elements of FIG. 1. FIG. 2 depicts the 3D dental model 202 representing the dentition of the patient, and the 3D digital representation 206 of the tooth 204 of the dentition.

The tooth 204 comprises a plurality of surfaces. Each of the plurality of surfaces has a specific function and name based on an orientation of the tooth 204. For example, a first surface 208 of the tooth 204 facing cheeks or lips is referred to as a buccal surface. Further, a second surface 210 of the tooth 204 facing the tongue is referred to as lingual surface, and a third surface 212 of the tooth 204 depicting a chewing surface of the tooth 204 is referred to as occlusal surface. Additionally, a fourth surface 214 of the tooth 204 present close to or far from a midline of a dental arch is referred to as proximal surface, and a fifth surface 216 of the tooth 204 present near gumline is referred to as cervical surface. Each of the plurality of surfaces plays an important role in function alignment, and health of the tooth 204. Therefore, an accurate identification of each of the plurality of surfaces in the 3D digital representation 104 as segments of the of the tooth 204 is crucial for a wide range of operations. These operations include, but are not limited to, dental charting, effective navigation across dental software, identification of certain points of interest, classification of the tooth surfaces in the 3D digital representation, surface diagnostic reporting and analysis, diagnosis of gingiva, diagnosis of proximal caries, identification of a need for a restorative or cosmetic treatment, and ensuring accuracy of mapping surface-related data and surfaces for various applications.

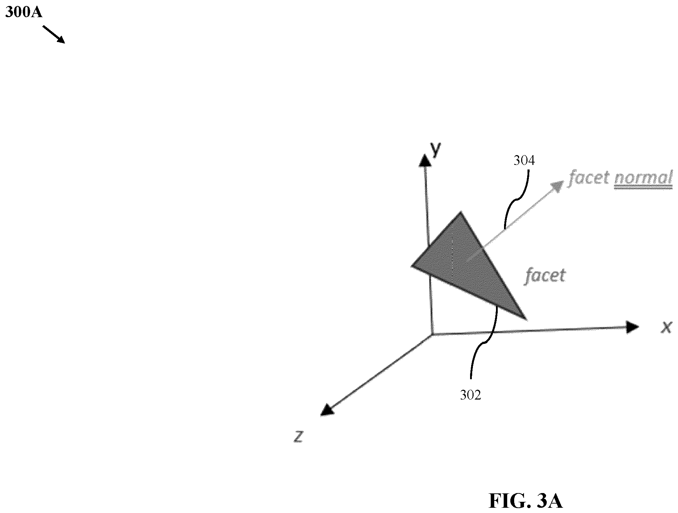

FIG. 3A illustrates a schematic diagram 300A of a facet 302, in accordance with an example embodiment of the present disclosure. FIG. 3A is explained in conjunction with elements of FIG. 1 and FIG. 2. FIG. 3A depicts the facet 302 in a coordinate system. The facet 302 represents a smallest cell that has a 3D geometry, such as a 3D dental model 202 or the 3D digital representation 104. Although the facet 302 is depicted as a triangle, it should not be construed as a limitation. In other implementations, a facet may have a polyhedron shape, i.e., any polygon whose corners correspond to vertices and not to a face.

Further, a facet normal 304 refers to a vector that is perpendicular to the facet 302. For example, the 3D digital representation 104 may comprise a mesh composed of the plurality of facets 104A depicted in FIG. 3B. Further, the facet normal 304 corresponds to the vector perpendicular to a particular facet, say the facet 302 of the plurality of facets 104A. In an example, the facet normal 304 is a unit vector that is pointing outwards from the facet 302. For example, the facet normal 304 may be, for instance, represented as (0,0,0).

FIG. 3B illustrates a schematic diagram 300B of the 3D dental model 202 of teeth, in accordance with an example embodiment of the present disclosure. The 3D dental model 202 of teeth comprises a plurality of facets. FIG. 3B is explained in conjunction with elements of FIG. 1, FIG. 2, and FIG. 3A.

With reference to FIG. 3B, a surface of the teeth in the 3D dental model 202 is made of or comprises multiple facets (depicted as facets 306A, 306B, 306C and 306D, and collectively referred to as facets 306). These facets are stitched together to form a mesh geometry at the surface of the teeth in the 3D dental model 202. The mesh geometry (or grid) of the multiple facets 306 is then used as the basis to perform simulations and modifications to the 3D dental model 202.

FIG. 4A illustrates a block diagram 400A of exemplary operations for performing a smoothing operation on a facet normal of a facet of the plurality of facets 104A, in accordance with an example embodiment of the present disclosure. In accordance with an example and not a limitation, the smoothing operation may be performed on the facet 302 having the facet normal 304. The facet 302 may correspond to a first facet of the plurality of facets 104A of the 3D digital representation 104 or the 3D digital representation 206 of the tooth 204. Moreover, the facet normal 304 is referred to as the first facet normal 304 of the first facet 302. FIG. 4A is explained in conjunction with elements of FIG. 1, FIG. 2, FIG. 3A, and FIG. 3B.

Pursuant to the present example, a smoothing operation is performed on the facet normal for each facet of the plurality of facets 104A. In the smoothing operation, the processor 106 is configured to perform the smoothing operation on the first facet normal 304 for the first facet 302. The smoothing operation facilitates to achieve visually appealing and realistic surfaces for the 3D digital representation 104. In an example, the first facet normal 304 is a vector perpendicular to a surface of the first facet 302 (as shown in FIG. 3A). The first facet normal 304 may be used for determination of lighting and shading effects on the surface of the 3D digital representation 104 of the tooth 204. However, when the facet has a unique normal, the resulting appearance may be overly faceted and sharp. To overcome such overly faceted appearance, smoothing operation is applied to blend the first facet normal 304 across one or more facet normal of the one or more neighbouring facets, for example, adjacent facets, thereby creating an illusion of continuous curved surface.

At 402, a facet normals retrieval operation is performed. In the facet normals retrieval operation, the processor 106 is configured to identify and retrieve one or more facet normals of the one or more neighbouring facets of the first facet 302. The one or more neighbouring facets may be associated with the first facet 302, such as due to having shared vertices therebetween. Subsequently, based on identification of the one or more neighbouring facets for the first facet 302, the one or more facet normal of the one or more neighbouring facets are retrieved. The one or more facet normals may then be used for lighting and shading computations for the first facet normal 304. This results in a mesh geometry of the surface of the 3D digital representation 104 of the tooth 204 that appears to be smooth despite being composed of flat facets.

At 404, a weighted summation determination operation is performed. In the weighted summation determination operation, the processor 106 is configured to determine a weighted summation of the retrieved one or more facet normals and the first facet normal 304. In an example, the smoothing operation includes averaging the first facet normal 304 with the one or more facet normals of the one or more neighbouring facets. The weighted summation refers to a process of assigning positive real values, i.e., weights, to each of the one or more facet normals, and then taking a weighted sum thereof with the first facet normal 304. For example, for the first facet 302, the one or more facet normals of the one or more neighbouring facets are summed with the first facet normal 304, such that each of the one or more facet normals and the first facet normal 304 have a weight, say $\propto$.

In an example, for the one or more facet normals, the corresponding weights of each of one or more facet normal, and the first facet normal 304, the weighted summation may be determined by coordinate-wise weighted averaging.

At 406, a smoothed facet normal direction determination operation is performed. In the smoothed facet normal direction determination operation, the processor 106 is configured to determine a smoothed facet normal direction 406A for the first facet normal 304 based on the weighted summation. In an example, the smoothed facet normal direction 406A is determined based on a normalized vector of the weighted summation.

In an example, the smoothed facet normal direction 406A for the first facet normal 304 is determined based on the following equation (1):

$$FNi_N = \text{Normalize}(FNi + \alpha\,FNn1 + \alpha\,FNn2 + \alpha\,FNn3)$$

where the first facet 304 is denoted as *i*; n1, n2 and n3 are possible neighbouring facets of the first facet 302; and *FN* stands for facet normal.

Pursuant to the present example, *FNi* corresponds to the first facet normal 304, FNn1 corresponds to a facet normal of the facet n1, FNn2 corresponds to a facet normal of the facet n2, and FNn3 corresponds to a facet normal of the facet n3. Further, $FNi_N$ corresponds to a normalized vector for the first facet normal 304. The normalized vector may indicate the smoothed facet normal direction 406A. In an example, the normalization of the weighted summation to determine the normalized vector is performed exemplarily based on the Pythagorean theorem.

In an example, the weights, $\alpha$, of the one or more facet normals are defined randomly so that each of the one or more facet normals does not have a same weight. For example, $\alpha$ for n1 may be 0.1, $\alpha$ for n2 may be 0.2, and $\alpha$ for n3 may be 0.3.

In certain cases, once the smoothed facet normal direction 406A is determined for the first facet normal 304, the process of determining another weighted summation and another smoothed facet normal direction 406A for the first facet normal 304 may be repeated iteratively for the first facet normal 304 until a criterion is met or fulfilled.

At 408, a criterion fulfilment check is made. In this regard, if the criterion is fulfilled, the flowchart moves to 410. In an example, the criterion is a predetermined number of iterations. In another example, the criterion is associated with an angle threshold for an angle difference between a facet normal direction of the first facet normal 304 of the first facet 302 and the normalized smoothed facet normal direction of the first facet normal 304. In other words, the iterations may be performed until an angle difference between an original direction or the facet normal direction of the first facet normal 304 and the smoothed facet normal direction 406A reaches the angle threshold or the angle difference is minimized. In an example, the angle threshold is 5 degrees, 10 degrees, 20 degrees, and so forth. In an example, the angle threshold may be predefined, or determined dynamically based on the original facet normal direction of the first facet normal 304. Subsequently, when the angle threshold is reached, i.e., the angle difference is less than or equal to the angle threshold, the criterion is fulfilled.

If the criterion is not fulfilled, the flowchart goes back to 404 to determine another weighted summation for the first facet normal 304 and the one or more facet normals of the one or more neighbouring facets. In this regard, a plurality of weighted summations of the one or more facet normal and the first facet normal 304 are determined in a plurality of iterations until the criterion is met. In an example, the plurality of weighted summations may be determined with, for example, different values of weights in different iterations. For example, for every iteration, a value of $\propto$ for each or some of the one or more facet normals may be updated. Further, based on the plurality of weighted summations, the smoothed facet normal direction 406A for the first facet normal 304 is determined multiple times, such as by applying the Eq. (1). To this end, the multiple iterations for determining the smoothed facet normal direction 406A for the first facet normal 304 aligns a direction of the first facet normal 304 with the direction of the one or more facet normals in the neighbourhood to ensure a smoother more gradual distribution of their values. This way the first face normal 304 is averaged across the one or more facet normal of its immediate local neighbourhood.

At 410, a normalized smoothed facet normal direction assignment operation is performed. In the normalized smoothed facet normal direction assignment operation, the processor 106 is configured to assign the normalized smoothed facet normal direction 406A to the first facet 302. To this end, the normalized smoothed facet normal direction 406A for the first facet 302 is determined based on the fulfilment of the criterion.

At 412, a segment assigning operation is performed. In the segment assigning operation, the processor 106 is configured to assign the first facet 302 to a first segment of the plurality of segments 118 based on the smoothed facet normal direction 406A thereof.

Tooth surfaces are not regular perfectly straight sections, and tooth surfaces may, for example, contain depressions, such as tooth wear, lesions, elevations, or cusps. The embodiments of the present disclosure are based on an understanding that facets that for a particular surface of a tooth may mostly point (or have an orientation) in a same direction. Based on this understanding, the facets are assigned to corresponding segments. In order to mitigate the presence of outliers, smoothing operation of facet normals at a tooth level is done. Details of the smoothing operation are described in conjunction with steps 402 - 410.

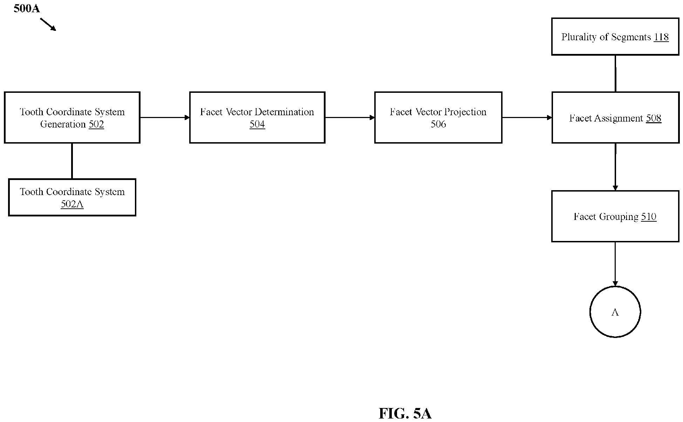

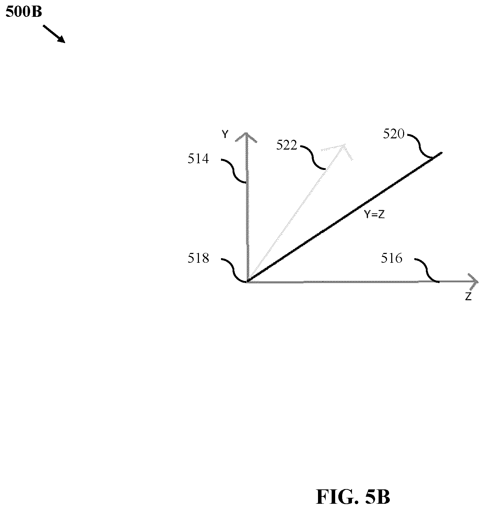

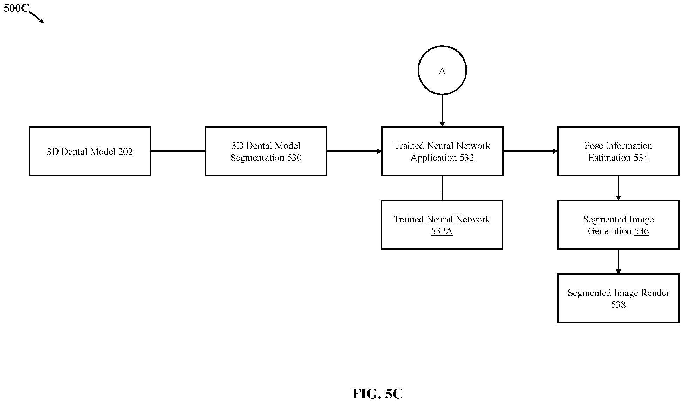

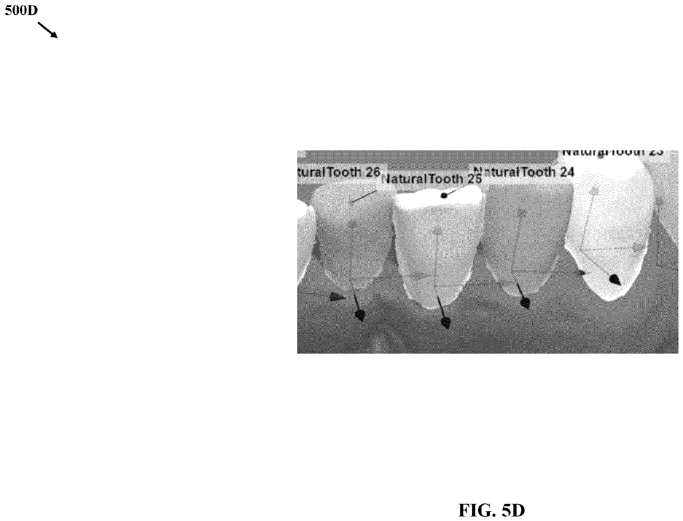

Once the first facet normal 304 is smoothed, the first facet 302 is assigned to a particular segment based on the direction of the smoothed first facet normal 304. In an example, if the smoothed first facet normal 304 extends towards the Y-axis, the first facet 302 is assigned to the first segment associated with the occlusal surface. In another example, if the smoothed first facet normal 304 extends towards the X-axis, the first facet 302 is assigned to the first segment associated with the buccal surface. In yet another example, if the smoothed first facet normal 304 extends towards the Z-axis, the first facet 302 is assigned to the first segment associated with the lingual surface. A manner in which the first facet 302 is assigned to the first segment is further described in conjunction with, for example, FIG. 5A, 5B, 5C and 5D.

FIG. 4B illustrates a schematic diagram 400B of a direction of a facet normal before an application of the smoothing operation, in accordance with an example embodiment of the present disclosure. FIG. 4B is explained in conjunction with elements of FIG. 1, FIG. 2, FIG. 3A, FIG. 3B, and FIG. 4A. In FIG. 4B, a direction 414 of the first facet normal 304 before an application of the smoothing operation is represented by, for example, but not limited to, an arrow pointing towards a left direction. Further, a direction 416A, 416B and 416C of the one or more facet normal, respectively, of the one or more neighbouring facets of the first facet 302 is represented by, for example, but not limited to, three arrows pointing towards a right direction. In this case, an angle difference between the direction 414 of the first facet normal 304 and the direction 416 is greater than a threshold.

FIG. 4C illustrates a schematic diagram 400C of a direction of a facet normal after an application of the smoothing operation, in accordance with an example embodiment of the present disclosure. FIG. 4C is explained in conjunction with elements of FIG. 1, FIG. 2, FIG. 3A, FIG. 3B, FIG. 4A, and FIG. 4B. In FIG. 4C, the direction 418 of the first facet normal 304 after the application of the smoothing operation is represented by, for example, but not limited to an arrow pointing towards a central direction. To this end, the direction 418 of the first facet normal 304 is aligned with the direction 416 of the one or more facet normal of the one or more neighbouring facets after the application of the smoothing operation. To this end, the angle difference between the direction 418 and the direction 416 is reduced after the application of the smoothing operation.

Although the present example describes operations for smoothing of the first facet normal 304 and assigning a first segment to the first facet 302, it should not be construed as a limitation. The exemplary operations of the FIG. 4A, FIG. 4B and FIG. 4C may be implemented on each of the plurality of facets 104A of the 3D digital representation 104 of the tooth. Subsequently, each facet of the plurality of facets 104A is assigned to a particular segment of the plurality of segments 118 based on the corresponding smoothed facet normal direction. Further, these exemplary operations may be performed for each tooth in the 3D dental model 202 of the teeth of the patient.

FIG. 5A illustrates a block diagram 500A of exemplary operations for grouping one or more facets of a segment, in accordance with an example embodiment of the present disclosure. FIG. 5A is explained in conjunction with elements of FIG. 1, FIG. 2, FIG. 3A, FIG. 3B, FIG. 4A, FIG. 4B, and FIG. 4C.

At 502, a tooth coordinate system generation operation is performed. In the tooth coordinate system generation operation, the processor 106 is configured to generate a tooth coordinate system 502A for the tooth 204. In an example, the tooth coordinate system 502A for the tooth 204 may be a local coordinate system located or having its origin at a centre of tooth crown and root apex point of the tooth 204. Details of the tooth coordinate system 502A are explained in conjunction with FIG. 5B.

In an example, the processor 106 may generate the tooth coordinate system 502A using a tooth pose estimation algorithm. Subsequently, a 3D local tooth coordinate system is estimated for each tooth in the 3D dental model 202.

Referring to FIG. 5B, a schematic diagram 500B of an exemplary tooth coordinate system 502A of a 3D digital representation 104 of a tooth 202 is illustrated, in accordance with an example embodiment of the present disclosure.

In an example, the processor 106 is configured to define the tooth coordinate system 502A such that the tooth coordinate system 502A includes a first co-ordinate axis points 514 (referred to as a first axis 514). In an example, the first axis 514 of the tooth coordinate system 502A represents a top of the tooth 204. Subsequently, the first axis 514 points in a direction of the occlusal surface of the tooth 204. In an example, the first axis 514 may correspond to a Y-axis of the tooth coordinate system 502A pointing upwards from the tooth 204, i.e., to the direction of the occlusal surface or an occlusal direction.

Further, the tooth coordinate system 502A includes a second co-ordinate axis points 516 (referred to as a second axis 516). In an example, the second axis 516 of the tooth coordinate system 502A represents a front of the tooth 204. Subsequently, the second axis 516 of the tooth 204 points outwards from the tooth, i.e., towards a buccal direction. In an example, the second axis 516 may correspond to a Z-axis of the tooth coordinate system 502A pointing outwards from the tooth 204, i.e., to the direction of the buccal surface or a buccal direction.

Moreover, an origin 518 of the tooth coordinate system 502A is placed somewhere inside the tooth 204 at a base of the tooth 204. In an example, the origin 518 of the tooth coordinate system 502A is placed at a centre of the tooth 204. Further, the tooth coordinate system 502A may indicate a dividing line 520 where Y=Z, i.e., a value of a vector or facet normal in the Y-axis 514 is equal to a value of the vector or the facet normal in the Z-axis.

In an exemplary embodiment, a normalized smoothed vector 522 (referred to as a facet vector 522) of the first facet normal 304 is represented in the tooth coordinate system 502A. As may be seen, a value of the facet vector 522 in the first axis or Y-axis 514 is greater than a value of the facet vector 522 in the second axis or Z-axis 516. Subsequently, based on the direction of the facet vector 522 of the first facet normal 304, the first facet 302 may be assigned to a first segment relating to the occlusal surface.

It may be noted that such representation of the tooth coordinate system 502A and the facet vector 522 is only exemplary. In other implementations, multi-axis coordinate system may be used, or other directions may be assigned to these axes. Further, the representation of the facet vector 522 is also exemplary and should not be construed as a limitation. In an example, an X-axis of the tooth coordinate system 502A points laterally outwards from the tooth, i.e., towards neighbouring tooth or in the distal, mesial or lingual direction.

Returning to FIG. 5A, at 504, a facet vector determination operation is performed. In the facet vector determination operation, the processor 106 is configured to determine or generate a normalized and smoothed facet vector for a facet normal, such as the first facet normal 304. For example, the facet vector for the first facet normal 304 is determined or generated based on multiple iterations of weighted summation and normalization. The weighted summation is determined based on assigned weights for each of the one or more facet normals neighbouring to the first facet normal. Further, the normalization is performed to normalize the weighted summation. Details of determining the smoothed facet normal direction 406A for the first facet normal 304 are provided in conjunction with, for example, FIG. 4A, FIG. 4B and FIG. 4C. Based on the smoothed facet normal direction 406A for the first facet normal 304, the facet vector for the first facet vector 304 is generated.

At 506, a facet vector projection operation is performed. In the facet vector projection operation, the processor 106 is configured to project the facet vector 522 for the first facet normal 304 to the tooth coordinate system 502A. In an example, the facet vector 522 is projected from original coordinates of the tooth 204 in the 3D dental model 202 to corresponding tooth pose coordinates of the tooth 204 based on pose estimation thereof. In this manner, a facet vector for each facet of the plurality of facets 104A of the 3D digital representation 104 is projected to the tooth coordinate system 502A of the tooth 204.

At 508, a facet assignment operation is performed. In the facet assignment operation, a facet is assigned to a particular segment of the plurality of segments 118. In an example, the first segment is assigned to the first facet 302 of the 3D digital representation 104 of the tooth 204 based on a direction of the facet vector or the facet vector 522 of the first facet normal 304. Similarly, a particular corresponding segment is assigned to each facet of the plurality of facets 104A. In particular, a segment of the plurality of segments 118 assigned to the first facet 302 may correspond to an occlusal surface, a buccal surface, or a lingual surface.

In an example, each of the plurality of segments 118 of the tooth 204 is defined based on the tooth coordinate system 502A. It may be noted that each of the plurality of segments 118 is associated with the occlusal surface, the buccal surface, or the lingual surface. Further, for the 3D digital representation 104 of the tooth 204, the different surfaces are defined based on a pose of the tooth 204. To this end, the plurality of different segments 118 corresponding to different axes of the tooth coordinate system 502A are defined based on the tooth coordinate system 502A generated for the tooth 204 based on corresponding pose.

In an embodiment, the facet vector 522 of the first facet normal 304 projected to the tooth coordinate system 502A is obtained or identified. Further, information associated with the facet vector 522 is used to assign the first facet 302 to the first segment. In an example, multiple assignment criteria may be checked sequentially for the facet vector 522. When an assignment criterion from the multiple assignment criteria gets satisfied, the first facet 302 is assigned to the first segment based on the satisfied assignment criterion. For example, a first assignment criterion may correspond to a condition that if a value of a facet vector of a facet in the Y-axis 514 is greater than a value of the facet vector in the Z-axis 516, then assign the facet to the occlusal surface. Further, a second assignment criterion may correspond to a condition that if a value of the facet vector of the facet in the Z-axis 516 is greater than zero, then assign the facet to the buccal surface. Further, a third assignment criterion may correspond to a condition that if the first assignment criterion and the second assignment criterion is not satisfied, then assign the facet to the lingual surface.

In this manner, the processor 106 is configured to assign each facet of the plurality of facets 104A to the occlusal surface, the buccal surface, or the lingual surface. The assignment of the segment to each of the plurality of facets 104A is based on the projection of the facet vector for each facet of the plurality of facets 104A in the tooth coordinate system 502A. Further, a tooth coordinate system is defined for each tooth in the 3D dental model 202 based on a pose of the tooth in the 3D dental model 202.

At 510, a facets grouping operation is performed. In the facets grouping operation, the processor 106 is configured to group one or more facets of the plurality of facets 104A based on corresponding assigned segment. In an example, multiple facets assigned to the occlusal surface related segment may be grouped into a first group. Similarly, multiple facets assigned to the buccal surface related segment may be grouped into a second group, and multiple facets assigned to the lingual surface related segment may be grouped into a third group.

Based on the grouping, the 3D digital representation 104 of the tooth 204 may be modified to indicate the different segments or surfaces of the tooth 204 accurately. In an example, the multiple facets of the first group corresponding to a segment may be indicated or depicted with a first colour, say red in the 3D digital representation 104 of the tooth 204. Similarly, the multiple facets of the second group corresponding to another segment are indicated or depicted with a second colour, say yellow in the 3D digital representation 104 of the tooth 204. Further, the multiple facets of the third group corresponding to yet another segment are indicated or depicted with a third colour, say blue in the 3D digital representation 104 of the tooth 204.

FIG. 5C illustrates a block diagram 500C of exemplary operations for rendering a segmented image of a tooth, in accordance with an example embodiment of the present disclosure. FIG. 5C is explained in conjunction with elements of FIG. 1, FIG. 2, FIG. 3A, FIG. 3B. FIG. 4A, FIG. 4B, FIG. 4C, FIG. 5A, and FIG. 5B.

At 530, a 3D dental model segmentation operation is performed. In the 3D dental model segmentation operation, the processor 106 is configured to segment the 3D dental model 202 of the teeth of the patient into different individual tooth. For example, one or more individual tooth, such as the tooth 204 of the patient may be identified. In an example, the processor 106 is configured to implement a segmentation algorithm to segment the 3D dental model 202. For example, the segmentation algorithm may apply surface a curvature-based method, a surface contour line-based method, or a harmonic field-based method to identify different tooth of the teeth. For example, the boundary of the tooth 204 may be identified. Thereafter, pixel values of the tooth 204 may be extracted from the 3D dental model to generate the 3D digital representation 104 of the tooth 204.

At 532, a trained neural network application operation is performed. In the neural network application operation, the processor 106 is configured to apply a trained neural network 532A to the 3D digital representation 104 of the tooth 204 and the grouped one or more facets of the plurality of facets 104A. In particular, the 3D digital representation 104 of the tooth 204 comprises the plurality of facets 104A defining surface information of the tooth 204. Further, the grouped one or more facets of the plurality of facets 104A define information associated with grouping of facets of different segments of the tooth 204. The trained neural network 532A analyses the 3D digital representation 104 and the grouped one or more facets of the plurality of facets 104A to estimate a pose for the tooth 204.

In an example, the neural network 532A is trained based on a training dataset associated with training dental models and/or training tooth models. The neural network 532A processes and analyses the training dental models and/or training tooth models to identify patterns and relationships associated with pose of tooth and segments of tooth. In an example, the neural network 532A may be implemented using a convolution neural network (CNN) trained on training images, training dental models and/or training tooth models to learn to estimate a pose or a position of a tooth.

In an embodiment of the disclosure, the training of the neural network 532A corresponds to tuning of one or more hyper-parameters associated with the neural network 532A based on the training dataset. In an embodiment of the disclosure, the processor 106 or the neural network 532A itself adjusts the one or more hyperparameters (the weights and other parameters) of the neural network 532A based on the identified patterns and the identified relationships in the in the training dataset for prediction or estimation of pose of a tooth.

In an embodiment, the processor 106 adjusts the one or more hyper-parameters of each node of the neural network 532A based on whether a predicted output of a final layer of the neural network 532A matches an actual output in the training dataset. The processor 106 further calculates a loss function or a training error associated with the neural network 532A based on a determination of whether the predicted output matches the actual output or not. The processor 106 further repeats the adjustment of the one or more hyper-parameters until a minima of the loss function is achieved, or until the training error is minimized.

At 534, a pose information estimation operation is performed. In the pose information estimation operation, the processor 106 is configured to estimate pose information for the tooth 204. In this regard, the pose information may indicate a pose or a position of the tooth 204 in a dental arch of the 3D dental model 202 of the teeth on the patient. In certain cases, the pose information may also include geometric attributes of the tooth 204.

To this end, the processor 106 is configured to determine the pose information for the 3D digital representation 104 of the tooth 204 based on the application of the trained neural network 532A. The pose information of the tooth 204 may include information associated with, for example, a position and a posture of the tooth 204 in a local coordinate system, i.e., the tooth coordinate system, L, 502A relative to a global coordinate system, W, of the 3D dental model. The pose of the tooth 204 may be defined by rotation and translation in a 3D space. Assuming that there is a point, p, on the tooth 204, a coordinate of the point, p, in the tooth coordinate system, L, 502A is denoted as, $pL$. Moreover, a coordinate of the point, p, in the global coordinate system, W, is denoted as, $pW$. A rotation matrix, R, is for a rotation of the point and a vector, C, is for the translation of the point. In an example, a transformation from $pW$ to $pL$ may be expressed as: $pL = R (pW - C)$. Consequently, the pose information of the tooth 204 is represented by a quaternion rotation, which is a four-dimensional vector having a centroid, C, of the tooth 204 as a three-dimensional vector. To obtain the tooth coordinate system 502A of the tooth 204, the neural network 532A, such as a CNN may be used for estimating values of x, y, and z coordinates of the tooth 204 in the tooth coordinate system 502A. Moreover, the pose information may also indicate additional geometric information, such as shape, size, surface texture and bite groove.

At 536, a segmented image generation operation is performed. In the segmented image generation operation, the processor 206 is configured to generate a segmented image of the toot 204 based on the estimated pose information and the grouped one or more facets of the plurality of facets 104A. In an example, the segmented image of the tooth 204 may indicate different surfaces or segments of the tooth. Moreover, the segmented image of the tooth 204 is generated based on the tooth coordinate system indicating the local coordinate of the tooth 204. Subsequently, the segmented image may indicate a view of the tooth 204 form a particular viewpoint.

At 538, a segmented image render operation is performed. In the segmented image render operation, the processor 106 is configured to render the segmented image of the tooth 204 on a display, such as a display of a user device, an augmented reality (AR) device, a virtual reality (VR) device, a mixed reality (MR) device, and so forth. In certain cases, a segmented 3D model of the tooth 204 representing the plurality of segments may be generated and rendered. This may allow the user to view the 3D model of the tooth 204 from different angles and viewpoints in order to perform various analysis and diagnoses on a surface of the tooth 204.

FIG. 5D illustrates a schematic diagram 500D of an exemplary coordinate system of the 3D dental model, in accordance with an example embodiment of the present disclosure. In particular, a corresponding local coordinate system is determined for each tooth in the 3D dental model 202. To this end, for each tooth, the global coordinate system of oral cavity of the patient is transformed to the local coordinate. Details of defining the local tooth coordinate are described in conjunction with, for example, FIG. 5A, FIG. 5B and FIG. 5C.

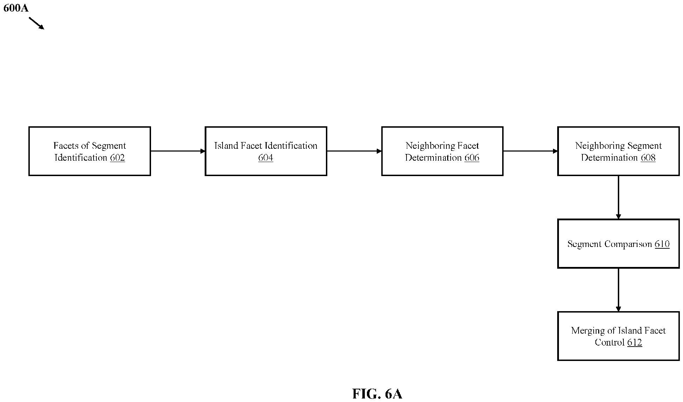

FIG. 6A illustrates a block diagram 600A of exemplary operations for merging islands of facets, in accordance with an example embodiment of the present disclosure. FIG. 6A is explained in conjunction with elements of FIG. 1, FIG. 2, FIG. 3A, FIG. 3B. FIG. 4A, FIG. 4B, FIG. 4C, FIG. 5A, FIG. 5B, FIG. 5C and FIG. 5D.

At 602, a facets of segment identification operation is performed. In the facets of segment identification operation, the processor 106 is configured to identify the grouped one or more facets associated with a segment, say the first segment of the plurality of segments 118. In an example, the processor 106 is configured to identify multiple facets associated with the occlusal surface, multiple facets associated with the buccal surface-related segment, or multiple facets associated with the lingual surface related segment.

At 604, an island facet identification operation is performed. In the island facet identification operation, the processor 106 is configured to identify an island facet of the grouped one or more facets of the particular segment, say the first segment. The island facet may be a facet that is separate or not connected to other facets of the grouped one or more facets of the first segment.

To this end, the island facet is associated with an island. In an example, an island facet refers to a facet(s) that may be distinct or separate from a main body of data, i.e., other facets of the same segment. For example, the island facet may represent outliers, anomalies or subsets of plurality of facets 104A. Pursuant to the present example, the different island facets may correspond to different facets that are not connected to other facets of a corresponding segment of the plurality of segments 118. Further, the island facets may have certain unique characteristics, for example, associated with corresponding segment.

Some embodiments of the present disclosure are based on a realization that resultant assignment of each of the plurality of facets 104A to a particular segment of the plurality of segments 118 may still not give smooth and accurate surfaces or segments of the 3D digital representation 104 of the tooth 204. In an example, neighbouring facets may be assigned to different segments. In another example, several individual islands of facets may exist corresponding to a given segment rather than a single unified area.

Some embodiments of the present disclosure are based on an understanding that a majority of the facets of the plurality of facets 104A are assigned the corresponding segment accurately. To this end, to obtain smooth and more accurate results of surfaces of the tooth 204, the islands of the facets, i.e., facet islands are identified and accurately merged in an iterative manner to achieve smooth and accurate representation of surfaces or segments of the tooth 204.

At 606, a neighbouring facet identification operation is performed. In the neighbouring facet identification operation, the processor is configured to identify a neighbouring facet for the island facet. In an example, the neighbouring facet is a facet that is adjacent or connected to a vertex of the island facet. In certain cases, multiple neighbouring facets may also be identified.

At 608, a neighbouring segment determination operation is performed. In the neighbouring segment determination operation, a neighbouring segment of the associated with the neighbouring facet is determined. In an example, the neighbouring segment is one of the plurality of segments 118. Further, the neighbouring segment may be a segment assigned to the neighbouring facet, such as based on a facet vector or a direction of a facet normal of the neighbouring facet.

At 610, a segment comparison operation is performed. In the segment comparison operation, the processor 106 is configured to compare the neighbouring segment of the neighbouring facet and the particular segment of the island facet. In an example, the neighbouring segment of the neighbouring facet is different from the particular segment assigned to the island facet. In an alternate example, the neighbouring segment of the neighbouring facet is same as the particular segment assigned to the island facet.

At 612, a merging of island facet control operation is performed. In the merging of island facet control operation, the processor 106 is configured to control a merging or not-merging of the island facet with the neighbouring facet based on the comparison.

In an example, a first determination is made to check if the particular segment of the island facet is different from the neighbouring segment of the neighbouring facet. If the first determination is satisfied or fulfilled, then the island facet may be merged with the neighbouring segment. Subsequently, the island facet may now belong to the neighbouring segment. Alternatively, if the first determination is not satisfied, i.e., the particular segment is same as the neighbouring segment, then the process may move to compare the particular segment of the island facet with other neighbouring segments of other neighbouring facets without any merging of the island facet. In an example, if multiple facets are identified to be associated with a same segment, then the multiple facets may form an island cluster. The process may continue until a neighbouring facet is found that is assigned to a different segment than the particular segment of the island cluster. In such a case, a second determination is made to check if a size of the island facet or the island cluster is less than a size threshold or not. If the size of the island facet or the island cluster is less than the size threshold, then the island facet or the island cluster may be merged with the neighbouring facet or a neighbouring cluster. However, if the size of the island facet or the island cluster is greater than the size threshold, then the island facet or the island cluster may not be merged with the neighbouring facet or the neighbouring cluster. In an example, the size threshold may be predefined, or defined dynamically based on a size of, for example, the tooth 204, the neighbouring facet, the neighbouring facet cluster, and the like.

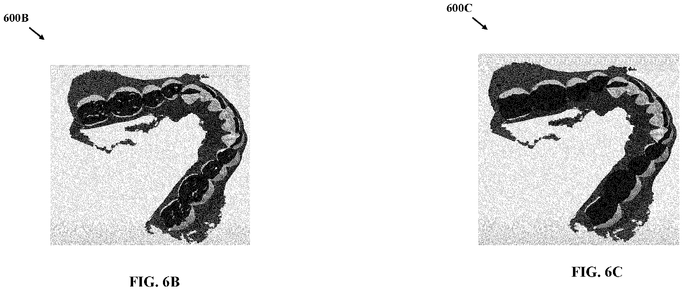

FIG. 6B illustrates a schematic diagram 600B of surfaces of a teeth before an application of an islands merging operation, in accordance with an example embodiment of the present disclosure. With respect to FIG. 6B, surfaces of the teeth of the 3D dental model 202 is depicted based on a particular segment assigned to each facet of the plurality of facets for each tooth, say the tooth 204 of the teeth. To this end, the surfaces of the teeth are uneven and certain facets or facet clusters are incorrectly represented or depicted.

FIG. 6C illustrates a schematic diagram 600C of surfaces of teeth after an application of an islands merging operation, in accordance with an example embodiment of the present disclosure. It may be noted that after the application of the islands merging operation, as described in the FIG. 6A, smooth surface of the teeth and smooth assignment of segments for each tooth is achieved. This results in a uniform depiction of all facets corresponding to a same surface and smooth transitions between surfaces. Further, accuracy in the classification of the different surfaces of the teeth is also improved, thereby improving analysis and diagnosis of the surfaces of the teeth.

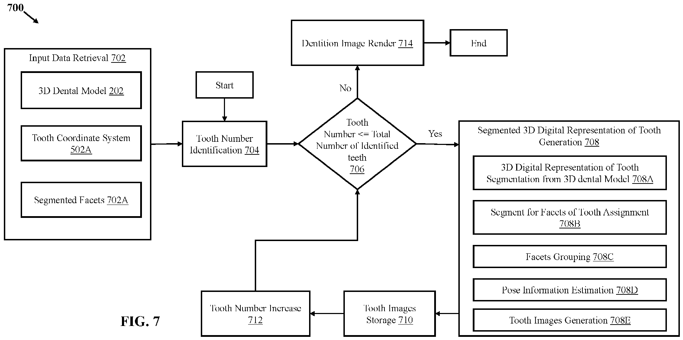

FIG. 7 illustrates a block diagram 700 of exemplary operations for rendering a dentition image of the 3D dental model 202, in accordance with an example embodiment of the present disclosure. FIG. 7 is explained in conjunction with elements of FIG. 1, FIG. 2, FIG. 3A, FIG. 3B, FIG. 4A, FIG. 4B, FIG. 4C, FIG. 5A, FIG. 5B, FIG. 5C, FIG. 5D, FIG. 6A, FIG. 6B and FIG. 6C.

At 702, an input data retrieval operation is performed. In the input data retrieval operation, the processor 106 is configured to retrieve input data. In an example, the input data includes the 3D dental model 202, the tooth coordinate system 502A and segmented facets. The 3D dental model 202 may be a 3D model of the teeth of a patient. The 3D dental model 202 may be generated based on a scan data that may be gathered using, for example, an intraoral scanner. The 3D dental model 202 may be a 3D model of a surface of the teeth. Further, the tooth coordinate system 502A is a local coordinate system for a particular tooth, say the tooth 204 of the teeth. The tooth coordinate system 502A may define position, orientation and movement of the individual tooth 204 in a 3D space. Moreover, the segmented facets are determined for each tooth of the teeth. For example, each of a plurality of facets of a tooth is assigned with a segment of the plurality of segments 118 based on the operations described in FIG. 1, FIG. 2, FIG. 3A-3B, FIG. 4A-4C, FIG. 5A-5D, and FIG. 6A-6C. Similarly, these operations may be implemented for each tooth of the teeth to generate the segmented facets for each tooth of the teeth. In an example, the input data may also include identification information associated with the 3D dental model 202 separating teeth pixels or facets from gingiva pixels or facets.

At 704, a tooth number identification operation is performed. In the tooth number identification operation, the processor 106 is configured to identify a tooth number of a selected tooth, say the tooth 204 from the teeth represented in the 3D dental model. In particular, each tooth of the teeth is assigned a number in a sequential manner based on a predefined criterion. For example, a third molar in left of the 3D dental model 202 may be assigned a number 1, a second molar in the left of the 3D dental model 202 may be assigned a number 2, a first molar in the left of the 3D dental model 202 may be assigned a number 3, a lateral incisor in the left may be assigned a number 7, a left central incisor may be assigned a number 8, a right central incisor may be assigned a number 9, a right lateral incisor may be assigned a number 10, a right first molar may be assigned a number 14, and the like. Similar, teeth in the lower jaw may also be numbered sequentially. Further, the operation of segmenting of the facets of a tooth may start from left and may follow a sequential order, i.e., a tooth with tooth number 1 will be processed first, followed by a tooth with tooth number 2, and so forth. To this end, a tooth number of a current tooth being processed is identified. It may be noted that such assignment of tooth number may be done based on identification of the teeth. For example, if the left third molar is not present in the 3D dental model 202 then the left second molar may be assigned with tooth number 1.

At 706, a determination is made to check if the identified tooth number of the tooth to be processed is less than or greater than a total number of identified teeth in the 3D dental model. If the total number of identified teeth is lesser than the identified tooth number, then it would indicate that all the teeth of the 3D dental model 202 has been processed. In such a step the operations move to 714. Alternatively, when the total number of identified teeth is greater than or equal to the identified tooth number, then it would indicate that all or some of the teeth of the 3D dental model 202 are yet to be processed, i.e., segmented. In such a step the operations move to 708.

At 708, a segmented 3D digital representation of tooth generation operation is performed. In the segmented 3D digital representation of tooth generation operation, the processor 106 is configured to generate the segmented 3D digital representation 104 of the current tooth being processed. In particular, the segmented 3D digital representation 104 of the current tooth may indicate each facet assigned to a particular segment of the plurality of segments 118. For example, a first group of one or more facets assigned to a first segment may be identified in a first colour different from a second colour of a second group of one or more facets assigned to a second segment.

In an example, the segmented 3D digital representation of tooth generation operation may include, at 708A, segmentation of the 3D digital representation 104 of the tooth 204 from the 3D dental Model 202. Further, the segmented 3D digital representation of tooth generation operation may include, at 708B, assignment of segments for facets of the tooth. In particular, a particular segment is assigned to each facet of the plurality of facets of the tooth based on a direction of a facet normal of the corresponding facet. Further, the segmented 3D digital representation of tooth generation operation may include, at 708C, a grouping of facets. In this regard, one or more facets of a particular segment are grouped to identify an area associated with the particular segment on the surface of the tooth. Moreover, the segmented 3D digital representation of tooth generation operation may include, at 708D, estimation of pose information. In an example, the pose information may indicate a position, an orientation and other geometric attributes of the toot. In this regard, a pose of the tooth in the 3D dental model 20 and a pose of the tooth in a local tooth coordinate system are estimated. The segmented 3D digital representation of tooth generation operation may include, at 708E, generation of tooth images. In an example, for a current tooth, one or more images in one or more modalities may be generated. Further, for example, the images may correspond to different views and inclinations.

At 710, a tooth images storage operation is performed. In the tooth images storage operation, the processor 106 is configured to store one or more tooth images of the current tooth, for example, in a database or the memory 108 of the system 102.

At 712, a tooth number increase operation is performed. In the tooth number increase operation, the processor 106 is configured to increase a tooth number by 1. The tooth number being increased may correspond to a tooth number of the current tooth that has been processed. Subsequently, the increased tooth number may be associated with another tooth to be processed or segmented next.

Thereafter, the data associated with the other tooth is retrieved for processing and the operations of 706, 708, 710 and 712 are performed again until all the teeth of the 3D dental model 202 have been processed.

When each tooth of the 3D dental model 202 has been processed, at 714, a dentition image render operation is performed. In the dentition image render operation, the processor 106 is configured to retrieve the images of the segment 3D digital representation of each tooth of the teeth of the 3D dental model 202. Based on the mages and the pose information for each tooth, a dentition image is generated. The dentition image may classify or indicate different surfaces of the teeth in a unified manner. A surface in the dentition image may be identified based on stitching or unification of a particular segment for each tooth of the 3D dental model 202. Subsequently, based on the different surfaces, the dentition image is generated and rendered.

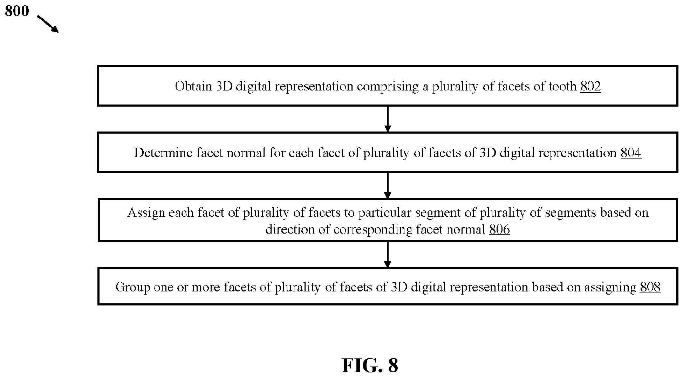

FIG. 8 illustrates a flowchart 800 of a method for segmenting a 3D digital representation of a tooth, in accordance with an example embodiment. FIG. 8 is explained in conjunction with elements of FIG. 1, FIG. 2, FIG. 3A, FIG. 3B, FIG. 4A, FIG. 4B, FIG. 4C, FIG. 5A, FIG. 5B, FIG. 5C, FIG. 5D, FIG. 6A, FIG. 6B, FIG. 6C and FIG. 7. The operations of the exemplary method may be executed by any computing system, for example, by the processors 106 of the system 102 of FIG. 1. The operations of the flowchart 800 may start at 802.

At 802, a 3D digital representation of a tooth may be obtained. In an embodiment, the processor 106 is configured to obtain the 3D digital representation 104 of the tooth 204. The 3D digital representation 104 includes a plurality of facets 104A.

At 804, a facet normal for each facet of the plurality of facets of the 3D digital representation may be determined. In an embodiment, the processor 106 is configured to determine the facet normal for each facet of the plurality of facets 104A of the 3D digital representation 104. Details of determining the facet normal for each facet of the plurality of facets of the 3D digital representation are provided, for example, in FIG. 4A-4C.

At 806, each facet of the plurality of facets may be assigned to a particular segment of a plurality of segments. In an embodiment, the processor 106 is configured to assign each facet of the plurality of facets 104A to a particular segment of a plurality of segments 118 based on a direction of a corresponding facet normal. Details of assigning each facet of the plurality of facets are provided, for example, in FIG. 5A-5D.

At 808, one or more facets of the plurality of facets may be grouped. In an embodiment, the processor 106 is configured to group one or more facets of the plurality of facets 104A of the 3D digital representation 104 based on the assigning. Details of grouping one or more facets of the plurality of facets are provided, for example, in FIG. 5A-5D.

Accordingly, blocks of the flowchart 800 support combinations of means for performing the specified functions and combinations of operations for performing the specified functions. It will also be understood that one or more blocks of the flowchart 800 can be implemented by special purpose hardware-based computer systems which perform the specified functions, or combinations of special purpose hardware and computer instructions.

Many modifications and other embodiments of the disclosure set forth herein will come to mind of one skilled in the art to which these disclosures pertain having the benefit of the teachings presented in the foregoing descriptions and the associated drawings. Therefore, it is to be understood that the disclosures are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

**Claims**

1.  A computer implemented method for segmenting a 3D digital representation of a tooth into segments, the method comprising:

    obtaining the 3D digital representation of the tooth, the 3D digital representation comprising a plurality of facets;
    determining a facet normal for each facet of the plurality of facets of the 3D digital representation;
    assigning each facet of the plurality of facets to a particular segment of a plurality of segments, based on a direction of a corresponding facet normal; and

grouping one or more facets of the plurality of facets of the 3D digital representation based on the assigning.

2.  The computer-implemented method according to the claim 1, further comprising:

    performing a smoothing operation on the facet normal for each facet of the plurality of facets; and
    assigning each facet of the plurality of facets to the particular segment of the plurality of segments based on the corresponding smoothed facet normal.

3.  The computer-implemented method according to the claim 2, wherein performing the smoothing operation on a first facet normal of a first facet of the plurality of facets comprises:

    retrieving one or more facet normals of one or more neighbouring facets of the first facet;
    determining a weighted summation of the retrieved one or more facet normals and the first facet normal;
    determining a smoothed facet normal direction for the first facet normal based on the weighted summation;
    assigning the smoothed facet normal direction to the first facet; and
    assigning the first facet to a first segment of the plurality of segments based on the smoothed facet normal direction.

4.  The computer-implemented method according to the claim 3, further comprising:

    determining a plurality of weighted summations of the one or more facet normal and the first facet normal in a plurality of iterations until a criterion is met;
    determining a normalized smoothed facet normal direction for the first facet normal based on the plurality of weighted summations; and
    assigning the normalized smoothed facet normal direction to the first facet.

5.  The computer-implemented method according to the claim 4, wherein the criterion is a predetermined number of iterations.

6.  The computer-implemented method according to any one or more of claims 4 or 5, wherein the criterion is associated with an angle threshold for an angle difference between a facet normal direction of the first facet normal of the first facet and the normalized smoothed facet normal direction of the first facet normal.

7.  The computer-implemented method according to claim 6, wherein the angle threshold is less than 20 or 15 or 10 or 5 degrees.

8.  The computer-implemented method according to any one or more of the preceding claims, further comprising:

    obtaining a 3D dental model of a dentition of a patient;
    segmenting the 3D dental model to obtain the 3D digital representation of the tooth;
    applying a trained neural network to the 3D digital representation of the tooth and the grouped one or more facets of the plurality of facets ;
    determining pose information for the 3D digital representation of the tooth based on the application of the trained neural network.

9.  The computer-implemented method according to any one or more of the preceding claims, wherein each of the plurality of segments is associated with one of: an occlusal surface, a buccal surface, or a lingual surface.

10. The computer-implemented method according to the claim 9, wherein the grouping of the one or more facets of the plurality of facets further comprises:

    defining a tooth coordinate system for the tooth, wherein the tooth coordinate system comprises a first co-ordinate axis points in a direction of the occlusal surface of the tooth and a second co-ordinate axis points in a direction of the buccal surface of the tooth;
    determining a facet vector for each facet of the plurality of facets;
    projecting the facet vector for each facet of the plurality of facets of the 3D digital representation to the tooth coordinate system;

defining each of the plurality of segments of the tooth based on the tooth coordinate system, wherein each of the plurality of segments is associated with one of: the occlusal surface, the buccal surface, or the lingual surface; and assigning each facet of the plurality of facets to one of: the occlusal surface, the buccal surface, or the lingual surface, wherein the assignment is based on based on the projection of the facet vector for each facet of the plurality of facets in the tooth coordinate system.

11. The computer-implemented method according to any of the preceding claims, further comprising:

identifying an island facet from the one or more facets associated with the particular segment of the plurality of segments;
identifying a neighbouring facet for the island facet;
determining a neighbouring segment associated with the neighbouring facet;
controlling a merging of the island facet associated with the particular segment and the neighbouring facet, based on the particular segment and the neighbouring segment.

12. The computer-implemented method according to the claim 11, further comprising:
merging the island facet associated with the particular segment and the neighbouring facets of the neighbouring segment based on a first determination that the neighbouring segment is different from the particular segment, and a second determination that a size of the island facet is less than a size threshold.

13. A computer system for segmenting a 3D digital representation of a tooth into segments, the computer system comprising:

a memory configured to store computer executable instructions; and
one or more processors configured to execute the instructions to:

obtain the 3D digital representation of the tooth, the 3D digital representation comprising a plurality of facets;
determine a facet normal for each facet of the plurality of facets of the 3D digital representation;
assign each facet of the plurality of facets to a particular segment of a plurality of segments, based on a direction of a corresponding facet normal; and
group one or more facets of the plurality of facets of the 3D digital representation based on the assigning.

14. The computer system according to the claim 13, wherein the one or more processors are further configured to:

perform a smoothing operation on the facet normal for each facet of the plurality of facets; and
assign each facet of the plurality of facets to the particular segment of the plurality of segments based on the corresponding smoothed facet normal.

15. The computer system according to the claim 14, wherein to perform the smoothing operation on a first facet normal of a first facet of the plurality of facets, the one or more processors are further configured to:

retrieve one or more facet normals of one or more neighbouring facets of the first facet;
determine a weighted summation of the retrieved one or more facet normals and the first facet normal;
determine a smoothed facet normal direction for the first facet normal based on the weighted summation;
assign the smoothed facet normal direction to the first facet; and
assign the first facet to a first segment of the plurality of segments based on the smoothed facet normal direction.

**100**

Computer System 102

One Or More Processors
106

Memory 108

Input/Output Interface 110

Network Interface 112

Communication
Channel 114

Database 116

3D Digital Representation
104

Plurality of Facets
104A

Plurality of Segments 118

**FIG. 1**

200

FIG. 2

**300A**

y

304

*facet normal*

*facet*

x

302

z

**FIG. 3A**

300B

FIG. 3B

**400A**

Facet 302

Facet normal 304

Facet Normals Retrieval 402

Weighted Summation Determination 404

Smoothed Facet Normal Direction 406A

Smoothed Facet Normal Direction Determination 406

Criterion Fulfilled? 408

No

Yes

Normalized Smoothed Facet Normal Direction Assignment 410

Segment Assignment 412

**FIG. 4A**

**400B**

**416A**

414

**416B**

**416C**

Pre-smoothing¶

**FIG. 4B**

**400C**

**416A**

418

**416B**

**416C**

Post-smoothing¶

**FIG. 4C**

**500A**

Plurality of Segments 118

Tooth Coordinate System Generation 502

Facet Vector Determination 504

Facet Vector Projection 506

Facet Assignment 508

Tooth Coordinate System 502A

Facet Grouping 510

A

**FIG. 5A**

**500B**

**FIG. 5B**

EP 4 765 019 A1

**500C**

3D Dental Model 202 → 3D Dental Model Segmentation 530 → Trained Neural Network Application 532 → Pose Information Estimation 534

Trained Neural Network 532A

Segmented Image Generation 536

Segmented Image Render 538

**FIG. 5C**

500D

**FIG. 5D**

600A

| Facets of Segment Identification 602 | → | Island Facet Identification 604 | → | Neighboring Facet Determination 606 | → | Neighboring Segment Determination 608 |

Segment Comparison 610

Merging of Island Facet Control 612

**FIG. 6A**

600B

**FIG. 6B**

600C

**FIG. 6C**

EP 4 765 019 A1

700

| Input Data Retrieval 702 |
| --- |
| 3D Dental Model 202 |
| Tooth Coordinate System 502A |
| Segmented Facets 702A |

Start

Tooth Number Identification 704

Tooth Number <= Total Number of Identified teeth 706

No → Dentition Image Render 714 → End

Yes → Segmented 3D Digital Representation of Tooth Generation 708

| Segmented 3D Digital Representation of Tooth Generation 708 |
| --- |
| 3D Digital Representation of Tooth Segmentation from 3D dental Model 708A |
| Segment for Facets of Tooth Assignment 708B |
| Facets Grouping 708C |
| Pose Information Estimation 708D |
| Tooth Images Generation 708E |

Tooth Images Storage 710

Tooth Number Increase 712

**FIG. 7**

31

**800**

```
┌─────────────────────────────────────────────────────────────────────────┐
│   Obtain 3D digital representation comprising a plurality of facets of    │
│   tooth 802                                                               │
└─────────────────────────────────────────────────────────────────────────┘
                                    │
                                    ▼
┌─────────────────────────────────────────────────────────────────────────┐
│   Determine facet normal for each facet of plurality of facets of 3D      │
│   digital representation 804                                              │
└─────────────────────────────────────────────────────────────────────────┘
                                    │
                                    ▼
┌─────────────────────────────────────────────────────────────────────────┐
│   Assign each facet of plurality of facets to particular segment of       │
│   plurality of segments based on direction of corresponding facet         │
│   normal 806                                                              │
└─────────────────────────────────────────────────────────────────────────┘
                                    │
                                    ▼
┌─────────────────────────────────────────────────────────────────────────┐
│   Group one or more facets of plurality of facets of 3D digital           │
│   representation based on assigning 808                                    │
└─────────────────────────────────────────────────────────────────────────┘
```

**FIG. 8**

Europäisches
Patentamt

European
Patent Office

Office européen
des brevets

# EUROPEAN SEARCH REPORT

**Application Number**

EP 24 22 2072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 096 782 A (BEIJING INST OF SURVEYING AND MAPPING) 28 May 2024 (2024-05-28) | 1-3, 13-15 | INV. G06T7/11 G06V10/764 |
| A | * abstract * * paragraph [0010] * * paragraph [0070] - paragraph [0081] * * paragraph [0114] - paragraph [0141] * ----- | 4-12 | G06V20/64 |
| A | XIAOJUAN NING ET AL: "Tree Segmentation from Scanned Scene Data", PLANT GROWTH MODELING, SIMULATION, VISUALIZATION AND APPLICATIONS (PMA), 2009 THIRD INTERNATIONAL SYMPOSIUM ON, IEEE, PISCATAWAY, NJ, USA, 9 November 2009 (2009-11-09), pages 360-367, XP031682481, ISBN: 978-1-76953-988-1 * abstract * * Algorithm 1.; page 2 - page 4 * ----- | 1-15 | |
| A | LIN YANG ET AL: "Segmentation of crop organs through region growing in 3D space", 2016 FIFTH INTERNATIONAL CONFERENCE ON AGRO-GEOINFORMATICS (AGRO-GEOINFORMATICS), IEEE, 18 July 2016 (2016-07-18), pages 1-6, XP032972919, DOI: 10.1109/AGRO-GEOINFORMATICS.2016.7577669 [retrieved on 2016-09-26] * abstract * * page 3 - page 4 * ----- | 1-15 | **TECHNICAL FIELDS SEARCHED (IPC)** G06T G06V |

The present search report has been drawn up for all claims

| Place of search | Date of completion of the search | Examiner |
|---|---|---|
| Munich | 13 May 2025 | Katsoulas, Dimitrios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 2072

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2025

| Patent document cited in search report | Publication date | Patent family member(s) | Publication date |
|---|---|---|---|
| CN 118096782 A | 28-05-2024 | NONE | |

For more details about this annex : see Official Journal of the European Patent Office, No. 12/82

EPO FORM P0459